(19) **Europäisches Patentamt / European Patent Office / Office européen des brevets**

(11) **EP 4 345 952 A1**

(12) # EUROPEAN PATENT APPLICATION
published in accordance with Art. 153(4) EPC

(43) Date of publication:
**03.04.2024 Bulletin 2024/14**

(21) Application number: **22848593.4**

(22) Date of filing: **27.07.2022**

(51) International Patent Classification (IPC):
***H01M 4/62*** (2006.01)

(52) Cooperative Patent Classification (CPC):
**H01M 4/13; H01M 4/62; H01M 10/0525;**
Y02E 60/10

(86) International application number:
**PCT/CN2022/108338**

(87) International publication number:
**WO 2023/005988 (02.02.2023 Gazette 2023/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.07.2021 CN 202110858947**

(71) Applicant: **BYD Company Limited**
**Shenzhen, Guangdong 518118 (CN)**

(72) Inventors:
• **YUAN, Xiaotao**
**Shenzhen, Guangdong 518118 (CN)**
• **XU, Zhan**
**Shenzhen, Guangdong 518118 (CN)**
• **BAO, Chunxiao**
**Shenzhen, Guangdong 518118 (CN)**
• **GE, Liping**
**Shenzhen, Guangdong 518118 (CN)**
• **HE, Kefeng**
**Shenzhen, Guangdong 518118 (CN)**

(74) Representative: **Arnold & Siedsma**
**Bezuidenhoutseweg 57**
**2594 AC The Hague (NL)**

(54) **POSITIVE ELECTRODE AND BATTERY**

(57) A positive electrode and a battery are provided. The positive electrode includes a current collector layer and an active component layer. The active component layer covers at least one surface of the current collector layer. The active component layer includes an active material and a conductive component. The conductive component includes at least one of a one-dimensional conductive material, a zero-dimensional conductive material, and a two-dimensional conductive material.

FIG. 1

EP 4 345 952 A1

**Description**

## CROSS REFERENCE TO RELATED APPLICATIONS

This application claims priority to Chinese Patent Application No. 202110858947.6, filed by BYD Company Limited on July 28, 2021 and entitled "POSITIVE ELECTRODE AND BATTERY".

## FIELD

The present disclosure relates to the field of battery material technologies, and more specifically, to a positive electrode and a battery.

## BACKGROUND

As a novel environmental-friendly energy source, the lithium-ion battery has been rapidly developed in recent years due to its advantages such as a high capacity, a high voltage, a small size and a light weight, a long cycle life, a wide operating range, good safety, and no memory effect. In response to the demand for large-scale application of lithium-ion batteries, improving performance of lithium-ion batteries and reducing their costs are the key, and further, increasing power density and energy density of positive and negative electrode materials and improving cycle performance and safety performance have become the focus of the development.

An example in which the battery performance is improved by increasing the conductivity of a positive electrode material of the lithium-ion battery is used. At present, conductive agents used in the production of a positive electrode slurry of the lithium-ion battery are carbon black, acetylene black, conductive graphite, carbon nanotubes, carbon nanofibers, and the like. However, the conductive agents are mostly used alone, and a same conductive agent is often used in different electrodes. The conductive agent cannot be selected according to a type of the positive electrode material, which is not conducive to performance of the conductive agent, and restricts the energy density and the cycle performance of the lithium-ion battery.

## SUMMARY

The present disclosure is intended to resolve one of the technical problems in the related art at least to some extent.

An objective of embodiments of the present disclosure is to provide novel technical solutions of a positive electrode and a battery.

According to a first aspect of the embodiments of the present disclosure, a positive electrode is provided, including a current collector layer and an active component layer. The active component layer covers at least one surface of the current collector layer. The active component layer includes:

an active material and a conductive component. A mass of the active material is $m_x+m_y$ (unit: g). The conductive component includes at least one of a one-dimensional conductive material, a zero-dimensional conductive material, and a two-dimensional conductive material. Masses of the one-dimensional conductive material, the zero-dimensional conductive material, and the two-dimensional conductive material are sequentially $m_1$, $m_2$, and $m_3$ (unit: g). $m_x$ is a mass of an active material whose surface is coated with the two-dimensional conductive material, $m_y$ is a mass of an active material whose surface is coated with the one-dimensional conductive material or the zero-dimensional conductive material, and the following formulas are met:

$$20*3.14*d_L*m_y/[\rho_L*4/3*3.14(d_L/2)^3] \leq m_1/(2.2*3.14*(d_1/2)^2*L_1)*L_1+10*m_2/(2.2*4/3*3.14*(d_2/2)^3)*d_2 \leq [30*3.14*d_L]*m_y/[\rho_L*4/3*3.14(d_L/2)^3] \tag{1}$$

$$3.14*(d_L/2)^2*m_x/[\rho_L*4/3*3.14(d_L/2)^3] \leq m_3/[(2.2*a*b*c)]*a*b \leq 1.5*3.14*(d_L/2)^2*m_x/[\rho_L*4/3*3.14*(d_L/2)^3] \tag{2}$$

where $d_L$ (unit: $\mu$m) is a diameter of the active material, $\rho_L$ is true density of the active material, $d_1$ (unit: $\mu$m) is a diameter of the one-dimensional conductive material, $L_1$ (unit: $\mu$m) is a length of the one-dimensional conductive material, $d_2$ (unit: $\mu$m) is a diameter of the zero-dimensional conductive material, and a (unit: $\mu$m), b (unit: $\mu$m), and c (unit: $\mu$m) are a width, a length, and a thickness of the two-dimensional conductive material sequentially.

Optionally, the conductive component includes the one-dimensional conductive material, and a mass ratio of the one-dimensional conductive material to the active material is (0.1 to 1.0):100.

Optionally, the diameter of the one-dimensional conductive material ranges from 2 nm to 60 nm, and the length of the one-dimensional conductive material ranges from 2 $\mu$m to 15 $\mu$m.

Optionally, the conductive component includes the zero-dimensional conductive material, and a mass ratio of the zero-dimensional conductive material to the active material is (0.1 to 3):100.

Optionally, the diameter of the zero-dimensional conductive material ranges from 20 nm to 100 nm.

Optionally, the conductive component includes the two-dimensional conductive material, and a mass ratio of the two-dimensional conductive material to the active material is (0.1 to 1.5):100.

Optionally, the thickness of the two-dimensional conductive material ranges from 1 nm to 20 nm, and the length and the width of the two-dimensional conductive material range from 0.2 $\mu$m to 10 $\mu$m.

Optionally, a mass fraction of the two-dimensional conductive material in the conductive component is less than or equal to 30%.

Optionally, the positive electrode comprises a single or multiple layers of the active component layer.

Optionally, the conductive component includes the one-dimensional conductive material, and the positive electrode comprises n layers of the active component layers, counted from the first layer that is the active component layer covering the current collector layer,

The one-dimensional conductive material in the $i^{th}$ active component layer has a mass $M_i=M_1*(1-i/n)$, where $M_1$ is a mass of the one-dimensional conductive material in the first active component layer, n is a natural number greater than or equal to 2, and i is a natural number greater than or equal to 2 and less than or equal to n.

Optionally, the conductive component includes the zero-dimensional conductive material, and a mass of the zero-dimensional conductive material in the first active component layer is $N_1$.

The zero-dimensional conductive material in the $i^{th}$ active component layer has a mass $N_i=N_1*i/n$.

Optionally, the active material includes one of or a combination of more of lithium iron phosphate, lithium cobaltate, lithium nickelate, and a nickel manganese cobalt ternary material.

According to a second aspect of the embodiments of the present disclosure, a battery is provided, including a negative electrode, a separator, and the positive electrode according to the first aspect.

The negative electrode and the positive electrode are respectively arranged on two sides of the separator.

One technical effect of the embodiments of the present disclosure is as follows.

The embodiments of the present disclosure provide a positive electrode, including a current collector layer and an active component layer. The active component layer of the positive electrode in the present disclosure includes a conductive component. The conductive component can construct an efficient conductive network by using one of or a combination of more of the one-dimensional conductive material, the zero-dimensional conductive material, and the two-dimensional conductive material as a conductive agent and through matching between dimension and content parameters of different conductive agents and different active materials, which improves conductivity performance and capacity performance of the positive electrode and ensures energy density of the positive electrode.

Additional aspects and advantages of the present disclosure will be given in the following descriptions, some of which will become apparent from the following description or may be learned from practices of the present disclosure.

## BRIEF DESCRIPTION OF THE DRAWINGS

The foregoing and/or additional aspects and advantages of the present disclosure will become apparent and comprehensible from the following descriptions of embodiments with reference to the accompanying drawings.

FIG. 1 is a schematic structural diagram of a positive electrode according to an embodiment of the present disclosure;
FIG. 2 shows an infiltration curve of a content of a one-dimensional conductive material in a positive electrode versus resistivity of the positive electrode according to an embodiment of the present disclosure;
FIG. 3 shows an infiltration curve of a content of a zero-dimensional conductive material in a positive electrode versus resistivity of the positive electrode according to an embodiment of the present disclosure; and
FIG. 4 shows an infiltration curve of a content of a two-dimensional conductive material in a positive electrode versus resistivity of the positive electrode according to an embodiment of the present disclosure.
1: current collector layer; and 2: active component layer.

## DETAILED DESCRIPTION

Various exemplary embodiments of the present disclosure are now described in detail with reference to the accompanying drawings. It should be noted that, unless otherwise specified, relative arrangement, numerical expressions, and numerical values of components and steps described in the embodiments do not limit the scope of the present disclosure.

The following descriptions of at least one exemplary embodiment are merely illustrative, and in no way constitute any limitation on the present disclosure and application or use of the present disclosure.

Technologies, methods, and devices known to those of ordinary skill in related arts may not be discussed in detail, but in proper circumstances, the techniques, the methods, and the devices should be considered as a part of the specification.

In all examples shown and discussed herein, any specific value should be construed as merely exemplary and not as limitations. Therefore, other examples of exemplary embodiments may have different values.

It should be noted that, similar numbers and letters refer to similar items in the following accompanying drawings, and therefore, once an item is defined in one accompanying drawing, the item does not need to be further discussed in the subsequent accompanying drawings.

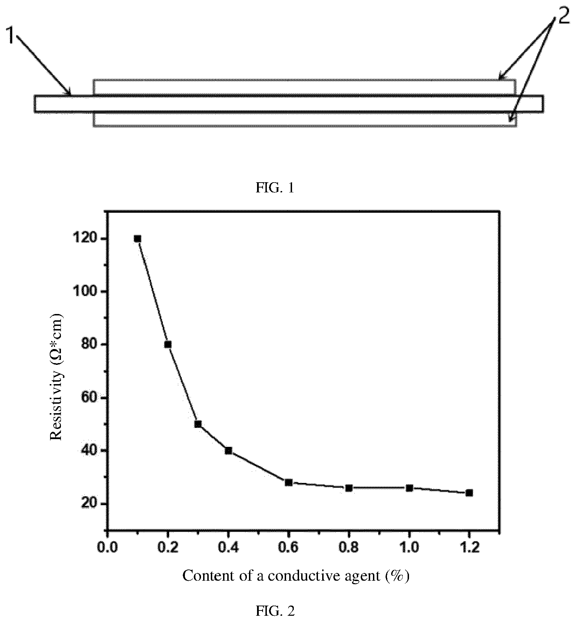

Referring to FIG. 1, an embodiment of the present disclosure provides a positive electrode, including a current collector layer 1 and an active component layer 2. The active component layer 2 covers at least one surface of the current collector layer 1. The active component layer 2 includes:

an active material and a conductive component. A mass of the active material is $m_x + m_y$. The conductive component includes at least one of a one-dimensional conductive material, a zero-dimensional conductive material, and a two-dimensional conductive material. Masses of the one-dimensional conductive material, the zero-dimensional conductive material, and the two-dimensional conductive material are sequentially $m_1$, $m_2$, and $m_3$. In addition, the following formulas are met:

$$20*3.14*d_L*m_y/[\rho_L*4/3*3.14(d_L/2)^3] \leq m_1/(2.2*3.14*(d_1/2)^2*L_1)*L_1+10*m_2/(2.2*4/3*3.14*(d_2/2)^3)*d_2 \leq [30*3.14*d_L]*m_y/[\rho_L*4/3*3.14(d_L/2)^3] \qquad (1)$$

$$3.14*(d_L/2)^2*m_x/[\rho_L*4/3*3.14(d_L/2)^3] \leq m_3/[(2.2*a*b*c)]*a*b \leq 1.5*3.14*(d_L/2)^2*m_x/[\rho_L*4/3*3.14*(d_L/2)^3] \qquad (2)$$

where $d_L$ is a diameter of the active material, $\rho_L$ is true density of the active material, $d_1$ is a diameter of the one-dimensional conductive material, $L_1$ is a length of the one-dimensional conductive material, $d_2$ is a diameter of the zero-dimensional conductive material, a, b, and c are a width, a length, and a thickness of the two-dimensional conductive material sequentially.

Specifically, the zero-dimensional conductive material may be carbon black, and the one-dimensional conductive material may be at least one of carbon nanotubes, metal nanowires, and a one-dimensional conductive polymer. The two-dimensional conductive material may be at least one of graphene, two-dimensional conductive metal organic frameworks (2D ECMOFs), and conductive two-dimensional molybdenum carbide (MXene). Specifically, all dimension parameters of the one-dimensional conductive material, the zero-dimensional conductive material, and the two-dimensional conductive material in formula 1 and formula 2 are dimension parameters of particles of single of the one-dimensional conductive material, the zero-dimensional conductive material, and the two-dimensional conductive material. The conductive component may include one of the one-dimensional conductive material, the zero-dimensional conductive material, and the two-dimensional conductive material, or may include a combination of two or more of the one-dimensional conductive material, the zero-dimensional conductive material, and the two-dimensional conductive material.

Formula 1 discloses content requirements for the conductive component of the one-dimensional conductive material and the zero-dimensional conductive material in the active component layer 2. Because the conductive component is an inactive substance, when a content of the conductive component in the active component layer 2 is too high, an electrode capacity of the positive electrode is significantly decreased. Moreover, to ensure conductivity of the positive electrode, a length of the conductive component assigned to a single active material particle is at least 20 times a perimeter of the active material particle, that is, a single active material particle may be coated with 20 conductive components, so that a complete conductive network is further constructed. However, a total length of the conductive component is at most 30 times the perimeter of the particle. When a total length of the conductive component is too large, improvement in the conductivity of the positive electrode is already limited, but the electrode capacity of the positive electrode is significantly decreased.

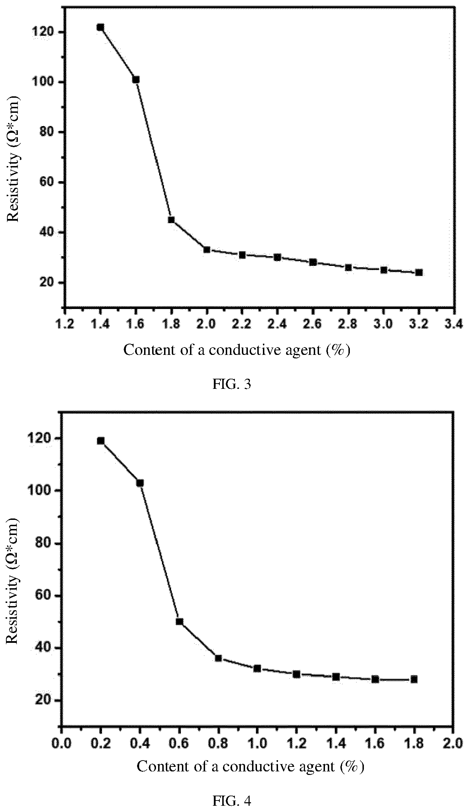

Referring to an infiltration curve of a content of a one-dimensional conductive material versus resistivity of a positive electrode shown in FIG. 2, it may be learned that when the content of the one-dimensional conductive material in the positive electrode is increased, the resistivity of the positive electrode significantly decreases. However, when the content of the one-dimensional conductive material is increased to some extent, for example, after the content of the one-dimensional conductive material reaches 0.6% in FIG. 2, the content of the one-dimensional conductive material has small impact on the resistivity of the positive electrode. Similarly, referring to an infiltration curve of a content of a zero-dimensional conductive material versus resistivity of a positive electrode shown in FIG. 3, it may be learned that when the content of the zero-dimensional conductive material in the positive electrode is increased, the resistivity of the positive electrode significantly decreases. However, when the content of the zero-dimensional conductive material is increased to some extent, for example, after the content of the zero-dimensional conductive material reaches 2% in FIG. 3, the content of the zero-dimensional conductive material has small impact on the resistivity of the positive electrode.

Formula 2 discloses content requirements for the conductive component of the two-dimensional conductive material in the active component layer 2. To ensure that the two-dimensional conductive material can cover active material particles and form an effective conductive network, an addition amount of the two-dimensional conductive material needs to meet the condition of formula 2. Referring to an infiltration curve of a content of a two-dimensional conductive material versus resistivity of a positive electrode shown in FIG. 4, it may be learned that when the content of the two-dimensional conductive material in the positive electrode is increased, the resistivity of the positive electrode significantly decreases. However, when the content of the two-dimensional conductive material is increased to some extent, for example, after the content of the two-dimensional conductive material reaches 0.8% in FIG. 4, the content of the two-dimensional conductive material has small impact on the resistivity of the positive electrode.

The active component layer 2 of the positive electrode in the present disclosure includes a conductive component. The conductive component can construct an efficient conductive network by using one of or a combination of more of the one-dimensional conductive material, the zero-dimensional conductive material, and the two-dimensional conductive material as a conductive agent and through matching between dimension and content parameters of different conductive agents and different active materials, which improves conductivity performance and capacity performance of the positive electrode and ensures energy density of the positive electrode. In addition, in a case that the conductive component of the active component layer 2 includes all of the one-dimensional conductive material, the zero-dimensional conductive material, and the two-dimensional conductive material, the conductive component can construct an efficient conductive network from multiple dimensions, that is, the point, the line, and the plane, and the length and the area of the conductive component are combined with the particle size distribution of the active material, to implement a proper design of the conductive network of the conductive component. Optionally, the conductive component includes the one-dimensional conductive material, and a mass ratio of the one-dimensional conductive material to the active material is (0.1 to 1.0):100, and preferably, (0.5 to 0.75):100.

Specifically, the active material may be lithium iron phosphate. Using 100 g of lithium iron phosphate as an example, true density of carbon is 2.2 g/cm$^3$, true density of the lithium iron phosphate is 3.6 g/cm$^3$, and $d_L$ is a diameter of the lithium iron phosphate. The true density refers to an actual mass of solid matter per unit volume in an absolutely dense state, that is, density after removal of internal pores or gaps between particles. To ensure that the conductive component represented by the one-dimensional conductive material can cover the active material represented by lithium iron phosphate particles and form an effective conductive network in the positive electrode, with reference to formula 1, an addition amount of the one-dimensional conductive material needs to satisfy the following conditions:

$$20*3.14*d_L*100/[3.6*4/3*3.14*(d_L/2)^3] \leq m_1/(2.2*3.14*(d_1/2)^2*L_1)*L_1 \leq 30*3.14*d_L*100/[3.6*4/3*3.14*(d_L/2)^3].$$

Moreover, a diameter of the one-dimensional conductive material ranges from 2 nm to 60 nm, and preferably, ranges from 5 nm to 15 nm. A length of the one-dimensional conductive material ranges from 2 $\mu$m to 15 $\mu$m, and preferably, ranges from 5 $\mu$m to 10 $\mu$m. Using the one-dimensional conductive material whose diameter falls within the foregoing diameter range and whose length falls within the foregoing length range an example, a mass of the one-dimensional conductive material in the active component layer 2 including 100 g of lithium iron phosphate as an active material may be controlled, so that the mass of the one-dimensional conductive material ranges from 0.5 g to 0.75 g. Moreover, when the mass of the one-dimensional conductive material is too large, for example, when the one-dimensional conductive material is too thick or too long, because the one-dimensional conductive material is not easy disperse, the one-dimensional conductive material is prone to agglomeration. In addition, when the mass of the one-dimensional conductive material is too small, it is not conducive to forming the conductive network through crosslinking in the one-dimensional conductive material.

Optionally, the conductive component includes the zero-dimensional conductive material, and a mass ratio of the zero-dimensional conductive material to the active material is (0.1 to 3.0):100, and preferably, (1.918 to 2.7):100.

Specifically, the active material may be lithium iron phosphate. Using 100 g of lithium iron phosphate as an example, to ensure that the conductive component represented by the zero-dimensional conductive material can cover the active material represented by lithium iron phosphate particles and form an effective conductive network in the positive electrode, with reference to formula 1, an addition amount of the zero-dimensional conductive material needs to satisfy the following conditions:

$$20*3.14*d_L*100/[3.6*4/3*3.14(d_L/2)^3] \leq 10*m_2/[(2.2*4/3*3.14*(d_2/2)^3)]*d_2 \leq 30*3.14*d_L*100/[3.6*4/3*3.14(d_L/2)^3].$$

A diameter of the zero-dimensional conductive material ranges from 20 nm to 100 nm, and preferably, ranges from 30 nm to 50 nm. Using the zero-dimensional conductive material whose diameter falls within the foregoing diameter range as an example, a mass of the zero-dimensional conductive material in the active component layer 2 including 100 g of lithium iron phosphate as an active material may be controlled, so that the mass of the zero-dimensional conductive material ranges from 1.918 g to 2.7 g. Moreover, when the mass of the zero-dimensional conductive material is too large, for example, when the diameter of the zero-dimensional conductive material is too large, because the zero-dimensional conductive material is prone to agglomeration, conductive efficiency of the conductive component is reduced. In addition, when the mass of the zero-dimensional conductive material is too small, it is not conducive to forming the conductive network through crosslinking in the zero-dimensional conductive material or between the zero-dimensional conductive material and other conductive agent.

Optionally, the conductive component includes the two-dimensional conductive material, and a mass ratio of the two-dimensional conductive material to the active material is (0.1 to 1.5):100, and preferably, (0.8 to 1.2):100.

Specifically, the active material may be lithium iron phosphate. Using 100 g of lithium iron phosphate as an example, to ensure that the conductive component represented by the two-dimensional conductive material can cover the active material represented by lithium iron phosphate particles and form an effective conductive network in the positive electrode, with reference to formula 2, an addition amount of the two-dimensional conductive material needs to satisfy the following conditions:

$$3.14*(d_L/2)^2*100/[3.6*4/3*3.14(d_L/2)^3] \leq m_3/[(2.2*a*b*c)]*a*b \leq 1.5*3.14*(d_L/2)^2*100/[3.6*4/3*3.14*(d_L/2)^3].$$

A thickness of the two-dimensional conductive material ranges from 1 nm to 20 nm, and a length and a width of the two-dimensional conductive material both range from 0.2 $\mu$m to 10 $\mu$m. Using the two-dimensional conductive material whose length falls within the foregoing length range, whose width falls within the foregoing width range, and whose thickness falls within the foregoing thickness range as an example, a mass of the two-dimensional conductive material in the active component layer 2 including 100 g of lithium iron phosphate as an active material may be controlled, so that the mass of the two-dimensional conductive material ranges from 0.8 g to 1.2 g. Moreover, when the mass of the two-dimensional conductive material is too large, although impedance of the positive electrode may be reduced, costs of the active component layer 2 are increased. In addition, the conductive agent represented by the two-dimensional conductive material is an inactive substance, and cannot provide a charging/discharging capacity. Therefore, when an addition amount of the conductive agent represented by the two-dimensional conductive material is too large, the capacity of the positive electrode is significantly decreased.

Optionally, a mass fraction of the two-dimensional conductive material in the conductive component is less than or equal to 30%.

Specifically, if in addition to including the two-dimensional conductive material, the conductive component further includes conductive agents such as the one-dimensional conductive material and the zero-dimensional conductive material, because when an amount of the two-dimensional conductive material is too large, aggregation between layers of the two-dimensional conductive material is caused, the conductive efficiency of the conductive component is reduced. In addition, a sheet-shaped two-dimensional conductive material is not conducive to diffusion of lithium ions in the positive electrode, which limits the energy density and the charging/discharging capacity of the positive electrode.

Optionally, the positive electrode comprises a single or multiple layers of the active component layer 2.

Specifically, the active component layer 2 may cover at least one surface of the current collector layer 1 in a coating manner. Coating of the active component layer 2 may be completed at a time, that is, a single-layered coating is formed. The single-layered coating can simplify a preparation process of the positive electrode, and reduce preparation costs of the positive electrode. Coating of the active component layer 2 may alternatively be completed multiple times, that is, a multi-layered coating is formed. For the multi-layered coating, good matching between the energy density and conductivity performance of the positive electrode is implemented by controlling a component ratio of the active material and the conductive component in each active component layer.

Optionally, the conductive component includes the one-dimensional conductive material, and the positive electrode comprises n layers of the active component layers 2, n is a natural number greater than or equal to 2. A layer of the active component layer bonded to the current collector layer is the first layer, and layers of the active component layer away from the first layer are the second layer, the third layer, the fourth layer, ..., and the $n^{th}$ layer in sequence. In other words, the $n^{th}$ layer is an active component layer away from the first layer, so that the $n^{th}$ layer is close to a separator layer.

As counted from the first layer that is the active component layer covering the current collector layer,

the one-dimensional conductive material in the $i^{th}$ active component layer has a mass

$$M_i=M_1*(1-i/n),$$

where $M_1$ is a mass of the one-dimensional conductive material in the first active component layer, n is a natural number greater than or equal to 2, and i is a natural number greater than or equal to 2 and less than or equal to n.

Specifically, the mass of the one-dimensional conductive material in the first layer may be determined according to formula 1. Because the one-dimensional conductive material has high electronic conductivity, the active component layer 2 may have more one-dimensional conductive material when the active component layer is closer to the current collector layer 1, to improve bonding strength and electronic transfer efficiency between the active material and the conductive component in the active component layer 2 and the current collector layer 1. For example, there are four active component layers 2. In a case that the four active component layers 2 are arranged in a stacked manner and all have a same area and a same width, a mass of the one-dimensional conductive material in the first layer is $M_1$, a mass of the one-dimensional conductive material in the second layer is $M_i=M_1*(1-2/4)=M_1*1/2$, a mass of the one-dimensional conductive material in the third layer is $M_i=M_1*(1-3/4)=M_1*1/4$, and a mass of the one-dimensional conductive material in the fourth layer is $M_i=M_1*(1-4/4)=0$. Therefore, the masses of the one-dimensional conductive materials in the multiple active component layers 2 are distributed in a gradient manner, to ensure the conductive efficiency of the active component layer 2.

Optionally, the positive electrode comprises n layers of the active component layers 2, and the conductive component includes a zero-dimensional conductive material. A mass of the zero-dimensional conductive material in the first active component layer is $N_1$.

A mass of the zero-dimensional conductive material in the $i^{th}$ active component layer is $N_i=N_1*i/n$, i is an integer greater than or equal to 2.

Specifically, the mass of the zero-dimensional conductive material in the first layer may be determined according to formula 1. Because the zero-dimensional conductive material has a high liquid retention capability, which is conducive to diffusion of lithium ions in the positive electrode, the active component layer 2 may have more zero-dimensional conductive material when the active component layer is further away from the current collector layer 1. While ensuring a retention rate of an electrolyte in the positive electrode, bonding between the one-dimensional conductive material and the zero-dimensional conductive material helps construct a good conductive network in a system of the multiple coating layers of the active component layer 2 . For example, there are four active component layers 2. In a case that the four active component layers 2 are arranged in a stacked manner and all have a same area and a same width, a mass of the zero-dimensional conductive material in the first layer is $N_1$, a mass of the zero-dimensional conductive material in the second layer is $N_1*2/4=N_1*1/2$, a mass of the zero-dimensional conductive material in the third layer is $Ni*3/4$, and a mass of the zero-dimensional conductive material in the fourth layer is $N_1*4/4=N_1$, so that masses of the zero-dimensional conductive materials in the multiple active component layers 2 are distributed in a gradient manner.

Optionally, the active material includes one of or a combination of more of lithium iron phosphate, lithium cobaltate, lithium nickelate, and a nickel manganese cobalt ternary material.

Specifically, the active material may be of various types. For example, when lithium iron phosphate ($LiFePO_4$) is selected as the active material, the safety performance and the service life of the positive electrode can be ensured due to structural stabilization of the lithium iron phosphate material during charging and discharging. A combination of active materials such as lithium cobaltate ($LiCoO_2$), lithium nickelate ($LiNiO_2$), and a nickel-cobalt-manganese ternary material ($LiNi_xCo_yMn_{1-x-y}O_2$) can improve the energy density of the positive electrode.

The embodiments of the present disclosure further provide a battery, including a negative electrode, a separator, and a positive electrode.

The negative electrode and the positive electrode are respectively arranged on two sides of the separator.

Specifically, an active component layer 2 of the positive electrode of the battery includes a conductive component. The conductive component can construct an efficient conductive network by using one of or a combination of more of the one-dimensional conductive material, the zero-dimensional conductive material, and the two-dimensional conductive material as a conductive agent and through matching between dimension and content parameters of different conductive agents and different active materials, which improves conductivity performance and capacity performance of the positive electrode and ensures energy density of the battery. In addition, in a case that the conductive component of the active component layer 2 simultaneously includes the one-dimensional conductive material, the zero-dimensional conductive material, and the two-dimensional conductive material, the conductive component can construct an efficient conductive network from multiple dimensions, that is, the point, the line, and the plane, and the length and the area of the conductive component are combined with the particle size distribution of the active material, to implement a proper design of the conductive network of the conductive component and ensure the capacity performance of the battery.

The positive electrode provided in the present disclosure is described below in detail with reference to examples and comparative examples.

The positive electrode in the following examples and comparative examples includes a current collector layer and an active component layer. The current collector layer is aluminum foil. The active component layer includes lithium iron phosphate, a binding agent, N-methyl-2-pyrrolidone, and one or more of a one-dimensional conductive material, a zero-dimensional conductive material, and a two-dimensional conductive material.

Preparation methods for the positive electrode in the examples and the comparative examples all include: Components of the active component layer are mixed to prepare a slurry, and the slurry is coated on the aluminum foil, and then baked and rolled to obtain the positive electrode.

The positive electrode and a corresponding negative electrode are assembled into a battery, a design capacity of the battery being 1.8 Ah.

Example 1

The active material included: lithium iron phosphate.

The conductive component included: carbon nanotubes.

100 g of lithium iron phosphate was selected. An average particle size D50 of the lithium iron phosphate is 1.30 $\mu$m ($d_L$). An average diameter of the carbon nanotubes is 11 nm, and an average length of the carbon nanotubes is 8 $\mu$m. According to formula 1, an addition amount of the carbon nanotubes was 0.6 g.

Example 2

The active material included: lithium iron phosphate.

The conductive component included: carbon black.

100 g of lithium iron phosphate was selected. An average particle size D50 of the lithium iron phosphate is 1.30 $\mu$m ($d_L$). An average diameter of the carbon black is 60 nm. According to formula 1 above, an addition amount of the carbon black was 2.2 g.

Example 3

The active material included: lithium iron phosphate.

The conductive component included: graphene.

100 g of lithium iron phosphate was selected. An average particle size D50 of the lithium iron phosphate is 1.30 $\mu$m ($d_L$). An average length of the graphene is 4.2 $\mu$m, an average width of the graphene is 2.45 $\mu$m, and an average thickness of the graphene is 14 nm. According to formula 2 above, an addition amount of the graphene was 1.0 g.

Example 4

The active material included: lithium iron phosphate.

The conductive component included: carbon nanotubes and carbon black.

100 g of lithium iron phosphate was selected. An average particle size D50 of the lithium iron phosphate is 1.30 $\mu$m ($d_L$). An average diameter of the carbon nanotubes is 11 nm and an average length of the carbon nanotubes is 8 $\mu$m. An average diameter of the carbon black is 60 nm. According formula 1 above, an addition amount of the carbon nanotubes was 0.3 g, and an addition amount of the carbon black was 0.9 g.

Comparative example 1

Material selections were the same as those in Example 1. An addition amount of carbon nanotubes was changed to 0.3 g.

Comparative example 2

Material selections were the same as those in Example 1. An addition amount of carbon nanotubes was changed to 1.0 g.

Comparative example 3

Material selections were the same as those in Example 2. An addition amount of carbon black was changed to 1.4 g.

Comparative example 4

Material selections were the same as those in Example 2. An addition amount of carbon black was changed to 3 g.

Comparative example 5

Material selections were the same as those in Example 3. An addition amount of graphene was changed to 0.5 g.

Comparative example 6

Material selections were the same as those in Example 3. An addition amount of graphene was changed to 1.6 g.
Resistivities tests were performed on the positive electrodes of the foregoing examples and comparative examples, and specific capacities of mixtures and direct current internal resistances of the batteries including the positive electrodes were tested.
Test results of the positive electrodes in the examples and the comparative examples were shown in Table 1.

Table 1

| Example | Longitudinal resistivity of a positive electrode ($\Omega$*cm) | 0.33 C specific capacity of a mixture (mAh/g) | Direct current internal resistance at 50% SOC (m$\Omega$) |
|---|---|---|---|
| Example 1 | 28 | 138.2 | 51.8 |
| Example 2 | 31 | 137.0 | 54.2 |
| Example 3 | 32 | 137.6 | 56.5 |
| Example 4 | 23 | 138.1 | 50.1 |
| Comparative example 1 | 50 | 135.1 | 58.9 |
| Comparative example 2 | 26 | 136.5 | 51.5 |
| Comparative example 3 | 122 | 134.2 | 62.6 |
| Comparative example 4 | 25 | 135.0 | 53.9 |
| Comparative example 5 | 68 | 135.2 | 63.9 |
| Comparative example 6 | 28 | 136.7 | 56.0 |

It may be learned from the longitudinal resistivities of the positive electrodes in Table 1 that all the positive electrodes provided in the examples of the present disclosure had relatively low resistivities, and the resistivities of all the positive electrodes in the examples were less than 32 $\Omega$*cm. Moreover, upon comparisons between Example 1 and Comparative example 1, between Example 2 and Comparative example 3, and between Example 3 and Comparative example 5, it may be learned that when a usage amount of the conductive component was too low, the resistivity of the positive electrode was significantly improved. The resistivities of all the positive electrodes in Comparative example 1, Comparative example 3, and Comparative example 5 were greater than 50 $\Omega$*cm.
According to the 0.33 C specific capacities of the mixtures (that is, capacities contributed by the active component layers of the electrodes per gram at a discharge rate of 0.33 C) in Table 1, all the specific capacities of the mixtures of the batteries including the positive electrodes provided in the examples of the present disclosure were greater than 137.0 mAh/g. Upon comparisons between Examples 1, 2, and 3 and Comparative examples 1, 3, and 5, it may be learned that when contents of the conductive components were too low, the specific capacities of the mixtures of the batteries were significantly decreased, and were all lower than 135.2 mAh/g. Moreover, upon comparisons between Examples 1, 2, and 3 and Comparative examples 2, 4, and 6, although after the contents of the conductive components were increased, the resistivities of the positive electrodes was slightly decreased, the excessive conductive components led to increased contents of inactive substances, resulting in reduced specific capacities of the mixtures of the batteries including the positive electrodes. All the specific capacities of the mixtures of batteries including the positive electrodes in Comparative examples 2, 4, and 6 were less than 136.7 mAh/g, which eventually caused reduced energy density of the battery.

It may be learned from the direct current internal resistances at 50% SOC in Table 1 that the current direction internal resistances of all the batteries including the positive electrodes provided in the examples of the present disclosure were less than 56.5 mΩ. However, the contents of the conductive components in the positive electrodes were inadequate in Comparative example 1, Comparative example 3, and Comparative example 5, resulting in increased resistivities of the positive electrodes, where the direct current internal resistances (DCIR) of all the batteries were greater than 58.9 mS2, which seriously affected kinetic performance of the battery.

Although some specific embodiments of the present disclosure have been described in details by way of examples, a person skilled in the art should understand that the foregoing examples are only for description and are not intended to limit the scope of the present disclosure. A person skilled in the art should appreciate that modifications may be made to the foregoing embodiments without departing from the scope and spirit of the present disclosure. The scope of the present disclosure is limited by the appended claims.

**Claims**

1. A positive electrode, comprising a current collector layer (1) and an active component layer (2), the active component layer (2) covering at least one surface of the current collector layer (1), the active component layer (2) comprising:

   an active material and a conductive component, a mass of the active material being of $m_x+m_y$ (unit: g), the conductive component comprising at least one of a one-dimensional conductive material, a zero-dimensional conductive material, and a two-dimensional conductive material, masses of the one-dimensional conductive material, the zero-dimensional conductive material, and the two-dimensional conductive material being sequentially $m_1$, $m_2$, and $m_3$ (unit: g), wherein $m_x$ is a mass of an active material whose surface is coated with the two-dimensional conductive material, $m_y$ is a mass of an active material whose surface is coated with the one-dimensional conductive material or the zero-dimensional conductive material, and the following formulas are met:

   $$20*3.14*d_L*m_y/[\rho_L*4/3*3.14(d_L/2)^3] \leq m_1/(2.2*3.14*(d_1/2)^2*L_1)*L_1+10*m_2/(2.2*4/3*3.14*$$
   $$(d_2/2)^3)*d_2 \leq [30*3.14*d_L]*m_y/[\rho_L*4/3*3.14(d_L/2)^3] \qquad (1)$$

   $$3.14*(d_L/2)^2*m_x/[\rho_L*4/3*3.14(d_L/2)^3] \leq m_3/[(2.2*a*b*c)]*a*b \leq 1.5*3.14*(d_L/2)^2*m_x/[\rho_L*4/3*3.14*(d_L/2)^3] \qquad (2)$$

   wherein $d_L$ (unit: μm) is a diameter of the active material, $\rho_L$ is true density of the active material, $d_1$ (unit: μm) is a diameter of the one-dimensional conductive material, $L_1$ (unit: μm) is a length of the one-dimensional conductive material, $d_2$ (unit: μm) is a diameter of the zero-dimensional conductive material, and a (unit: μm), b (unit: μm), and c (unit: μm) are a width, a length, and a thickness of the two-dimensional conductive material sequentially.

2. The positive electrode according to claim 1, wherein the conductive component comprises the one-dimensional conductive material, and a mass ratio of the one-dimensional conductive material to the active material is (0.1 to 1.0): 100.

3. The positive electrode according to claim 2, wherein the diameter of the one-dimensional conductive material ranges from 2 nm to 60 nm, and the length of the one-dimensional conductive material ranges from 2 μm to 15 μm.

4. The positive electrode according to any one of claims 1 to 3, wherein the conductive component comprises the zero-dimensional conductive material, and a mass ratio of the zero-dimensional conductive material to the active material is (0.1 to 3.0): 100.

5. The positive electrode according to claim 4, wherein the diameter of the zero-dimensional conductive material ranges from 20 nm to 100 nm.

6. The positive electrode according to any one of claims 1 to 5, wherein the conductive component comprises the two-dimensional conductive material, and a mass ratio of the two-dimensional conductive material to the active material is (0.1 to 1.5): 100.

7. The positive electrode according to claim 6, wherein the thickness of the two-dimensional conductive material ranges from 1 nm to 20 nm, and the length and the width of the two-dimensional conductive material range from 0.2 $\mu$m to 10 $\mu$m.

8. The positive electrode according to claim 6 or 7, wherein a mass fraction of the two-dimensional conductive material in the conductive component is less than or equal to 30%.

9. The positive electrode according to any one of claims 1 to 8, wherein the positive electrode comprises a single or multiple layers of the active component layer (2).

10. The positive electrode according to claim 9, wherein the conductive component comprises the one-dimensional conductive material, and the positive electrode comprises n layers of the active component layers (2), counted from the first layer that is the active component layer (2) covering the current collector layer (1),

a mass of the one-dimensional conductive material in the $i^{th}$ active component layer (2) is

$$M_i = M_1 * (1 - i/n),$$

wherein $M_1$ is a mass of the one-dimensional conductive material in the first active component layer (2), n is a natural number greater than or equal to 2, and i is a natural number greater than or equal to 2 and less than or equal to n.

11. The positive electrode according to claim 10, wherein

the conductive component comprises the zero-dimensional conductive material, and a mass of the zero-dimensional conductive material in the first active component layer (2) is $N_1$; and
a mass of the zero-dimensional conductive material in the $i^{th}$ active component layer (2) is $N_i = N_1 * i/n$.

12. The positive electrode according to any one of claims 1 to 11, wherein the active material comprises one of or a combination of more of lithium iron phosphate, lithium cobaltate, lithium nickelate, and a nickel manganese cobalt ternary material.

13. A battery, comprising a negative electrode, a separator, and the positive electrode according to any one of claims 1 to 12,
the negative electrode and the positive electrode being respectively arranged on two sides of the separator.

FIG. 1

Content of a conductive agent (%)

FIG. 2

FIG. 3

FIG. 4

## INTERNATIONAL SEARCH REPORT

| International application No. |
|---|
| **PCT/CN2022/108338** |

**A. CLASSIFICATION OF SUBJECT MATTER**

H01M 4/62(2006.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI: 电池, 正极, 阴极, 导电, 电导, 零维, 一维, 二维, 颗粒, 粉末, 线, 片, 面, 包覆, 覆盖, 壳, cell, battery, positive, cathode, conduct, dimensional, grain, powder, line, sheet, plain, coat, shell

**C. DOCUMENTS CONSIDERED TO BE RELEVANT**

| Category* | Citation of document, with indication, where appropriate, of the relevant passages | Relevant to claim No. |
|---|---|---|
| A | CN 102694201 A (DONGGUAN AMPEREX TECHNOLOGY LIMITED et al.) 26 September 2012 (2012-09-26) <br> description, paragraphs 6-17, and embodiment 1 | 1-13 |
| A | CN 112687865 A (HUIZHOU EVE ENERGY CO., LTD.) 20 April 2021 (2021-04-20) <br> entire document | 1-13 |
| A | CN 111785972 A (PEKING UNIVERSITY SHENZHEN GRADUATE SCHOOL) 16 October 2020 (2020-10-16) <br> entire document | 1-13 |
| A | CN 103545525 A (NANJING HONGDE NANOMATERIALS CO., LTD.) 29 January 2014 (2014-01-29) <br> entire document | 1-13 |
| A | US 2013288111 A1 (AN, J. W. et al.) 31 October 2013 (2013-10-31) <br> entire document | 1-13 |
| A | WO 2020065832 A1 (MURATA MANUFACTURING CO., LTD. et al.) 02 April 2020 (2020-04-02) <br> entire document | 1-13 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 September 2022** | **28 September 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/108338**

| Patent document cited in search report | | | Publication date (day/month/year) | Patent family member(s) | | | Publication date (day/month/year) |
|---|---|---|---|---|---|---|---|
| CN | 102694201 | A | 26 September 2012 | None | | | |
| CN | 112687865 | A | 20 April 2021 | None | | | |
| CN | 111785972 | A | 16 October 2020 | None | | | |
| CN | 103545525 | A | 29 January 2014 | None | | | |
| US | 2013288111 | A1 | 31 October 2013 | KR | 20130122284 | A | 07 November 2013 |
| WO | 2020065832 | A1 | 02 April 2020 | US | 2021202951 | A1 | 01 July 2021 |
| | | | | JP | WO2020065832 | A1 | 30 August 2021 |
| | | | | KR | 20210046762 | A | 28 April 2021 |
| | | | | CA | 3114556 | A1 | 02 April 2020 |
| | | | | EP | 3859843 | A1 | 04 August 2021 |

Form PCT/ISA/210 (patent family annex) (January 2015)

**EP 4 345 952 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110858947